# EUROPÄISCHE PATENTSCHRIFT

(11) **EP 4 119 907 B1**
(45) Veröffentlichungstag und Bekanntmachung des Hinweises auf die Patenterteilung: **03.04.2024**
(21) Anmeldenummer: 21186055.6
(22) Anmeldetag: 16.07.2021
(51) Int. Cl.: G01F 23/284, G01S 13/88, H01Q 1/22, G01S 7/03, H01Q 5/30, H01Q 21/00, G01S 13/89

(54) **VORRICHTUNG UND VERFAHREN ZUM MESSEN DES FÜLLSTANDS IN EINEM TANK FÜR EIN FAHRZEUG, DAMIT VERSEHENER TANK, UND DEN TANK UMFASSENDES FAHRZEUG**
DEVICE AND METHOD FOR MEASURING THE LEVEL IN A TANK FOR A VEHICLE, TANK EQUIPPED WITH SAME, AND VEHICLE COMPRISING SAID TANK
DISPOSITIF ET PROCÉDÉ DE MESURE DU NIVEAU DE REMPLISSAGE D'UN RÉSERVOIR POUR UN VÉHICULE, RÉSERVOIR ÉQUIPÉ DE CE DISPOSITIF, ET VÉHICULE COMPRENANT LE RÉSERVOIR

(43) Veröffentlichungstag der Anmeldung: 18.01.2023
(73) Patentinhaber: Airbus (S.A.S.), 31700 Blagnac (FR)
(72) Erfinder: Multerer, Thomas, 82024 Taufkirchen (DE)
(74) Vertreter: KASTEL Patentanwälte PartG mbB

(56) Entgegenhaltungen:
- EP-A2- 2 827 606
- WO-A1-2021/044112
- DE-A1-102012 109 101
- US-A1- 2002 059 828
- US-A1- 2012 158 321
- DA COSTA I F ET AL: "Tri-band slotted waveguide antenna array for millimetric-waves applications", THE 8TH EUROPEAN CONFERENCE ON ANTENNAS AND PROPAGATION (EUCAP 2014), EUROPEAN ASSOCIATION ON ANTENNAS AND PROPAGATION, 6. April 2014 (2014-04-06), Seiten 2052-2054, XP032642937, DOI: 10.1109/EUCAP.2014.6902210 [gefunden am 2014-09-17]
- DA COSTA I F ET AL: "Optically Controlled Reconfigurable Antenna Array for mm-Wave Applications", IEEE ANTENNAS AND WIRELESS PROPAGATION LETTERS, Bd. 16, 2. Mai 2017 (2017-05-02), Seiten 2142-2145, XP011657938, ISSN: 1536-1225, DOI: 10.1109/LAWP.2017.2700284 [gefunden am 2017-07-31]

## Beschreibung

Die Erfindung betrifft eine Füllstandsmessvorrichtung zum Messen des Füllstands einer Flüssigkeit in einem Tank eines Fahrzeugs. Weiter betrifft die Erfindung einen Tank für ein Fahrzeug sowie ein entsprechend mit dem Tank versehenes Fahrzeug, insbesondere Luftfahrzeug, wie z.B. Flugzeug. Weiter betrifft die Erfindung ein Herstellverfahren zum Herstellen eines in dem Tank anzuordnenden Elements der Füllstandsmessvorrichtung. Schließlich betrifft die Erfindung ein Füllstandsmessverfahren zum Messen des Füllstands einer Flüssigkeit in dem Tank eines Fahrzeugs.

Es gibt unterschiedliche Messverfahren und Messvorrichtungen zur Füllstandsmessung. Ein Überblick über die derzeit bekannten und auf dem Markt angebotenen Verfahren ist in der Literaturstelle [1] wiedergegeben:
[1] Füllstandsmessung - Wikipedia. Heruntergeladen aus dem Internet unter
   dem Link https://de.wikipedia.org/wiki/Füllstandmessung am 09.07.2021. Demnach ist die Füllstandsmessung mittels Radars, wobei Radarwellen durch eine Antenne auf die Flüssigkeit abgestrahlt werden und aus der Laufzeit der an der Flüssigkeitsoberfläche reflektierten Radarwelle die Füllhöhe ermittelt wird, grundsätzlich bekannt. In der Literaturstelle [2]
[2] "Auswahlkriterien für Radarsysteme zur Füllstandmessung in der Chemischen Industrie", Michael J. Heim und Andreas Mayr, ATP Automatisierungstechnische Praxis 2/2001, Februar 2001 sind die grundsätzlichen Elemente einer Radar-Füllstandsmessvorrichtung und Kriterien für deren Auslegung zusammengestellt. Auch die Literaturstelle
[3] DE 10 2012 109 101 A1
   beschreibt Vorrichtungen und Verfahren zur Füllstandsmessung mittels Radar, wobei zusätzlich noch ein Herstellverfahren zum Herstellen einer geeigneten Antenne beschrieben wird. Aus der Literaturstelle
[4] US 2002/0059828 A1 sind eine Füllstandsmessvorrichtung zum Messen des Füllstands in einem Tank sowie ein entsprechendes Verfahren bekannt. Dabei wird eine Wellenleiter-Schlitz-Antenne, die einen Wellenleiter und mehrere an dem Wellenleiter beabstandet angeordnete Schlitze aufweist, verwendet. Anhand in die Antenne eingespeister Wellen sowie Messung deren Reflexion wird ein Füllstand erfasst. Die Erfindung zielt insbesondere auf eine Füllstandsmessung für Tanks von modernen umweltfreundlicheren Fahrzeugen, insbesondere Luftfahrzeugen, die mit CO2 einsparenden Treibstoffen, wie insbesondere Wasserstoff, betrieben werden sollen, ab. Gerade bei Luftfahrzeugen ist eine möglichst genaue Feststellung der Füllmenge an Treibstoff sehr erwünscht.

Die Erfindung hat sich zur Aufgabe gestellt, Vorrichtungen und Verfahren zu schaffen, die eine genauere Füllstandsmessung bei Tanks in Fahrzeugen, insbesondere Luftfahrzeugen, auch bei neueren Treibstoffmedien ermöglichen. Zum Lösen dieser Aufgabe schafft die Erfindung eine Füllstandsmessvorrichtung nach Anspruch 1 und ein Füllstandsmessverfahren nach dem Nebenanspruch. Vorteilhafte Verwendungen sowie ein Herstellverfahren einer Antenne der Füllstandsmessvorrichtung sind in den weiteren Nebenansprüchen angegeben. Vorteilhafte Ausgestaltungen sind Gegenstand der Unteransprüche.

Die Erfindung schafft gemäß einem ersten Aspekt davon eine Füllstandsmessvorrichtung zum Messen des Füllstands einer Flüssigkeit in einem Tank eines Fahrzeugs, umfassend wenigstens eine im oberen Bereich des Tanks anzubringende Mehrfachwellenlängen-Schlitzantenne, die einen Wellenleiter und mehrere an dem Wellenleiter beabstandete Schlitze aufweist, die unterschiedlich dimensioniert sind, so dass sie unterschiedliche Resonanzfrequenzen haben, um jeweils Radarwellen mit unterschiedlichen Wellenlängen abzustrahlen, einen mit dem Wellenleiter koppelbaren Radarsender zum Speisen der Mehrfachwellenlängen-Schlitzantenne mit Radarwellen mit den unterschiedlichen Resonanzfrequenzen, einen Radarempfänger zum Empfangen reflektierter Radarwellen unterschiedlicher Frequenzen über die Mehrfachwellenlängen-Schlitzantenne und eine Auswerteeinheit zum Erfassen des Füllstandes und der räumlichen Verteilung der Flüssigkeit in dem Tank anhand der reflektierten Radarwellen.

Es ist bevorzugt, dass der Wellenleiter ein Rechteckrohr mit einer Reihe von Schlitzen darin ist.

Es ist bevorzugt, dass die Auswerteeinheit dazu ausgebildet ist, aus dem Füllstand und der räumlichen Verteilung die Menge an Flüssigkeit in dem Tank zu bestimmen.

Es ist bevorzugt, dass wenigstens eine erste und eine zweite im oberen Bereich des Tanks mit Abstand zueinander anzubringende Multiband-Wellenleiter-Schlitz-Antenne vorgesehen sind, die jeweils den Wellenleiter und die mehreren an dem Wellenleiter beabstandet angeordnete Schlitze aufweisen, wobei die Füllstandsmessvorrichtung dazu ausgebildet ist, anhand von durch die erste und zweite Multiband-Wellenleiter-Schlitz-Antenne gesendeter und empfangener Radarwellen die räumliche Verteilung der Flüssigkeit zu erfassen.

Vorzugsweise sind mehrere der Multiband-Wellenleiter-Schlitz-Antennen, die jeweils den Wellenleiter und die darin mit Abstand in einer ersten Richtung beabstandet vorgesehenen unterschiedlich dimensionierten Schlitze aufweisen in einer zweiten Richtung beabstandet zueinander angeordnet. Pro Antenne kann jeweils ein eigener Radarsender und ein eigener Radarempfänger vorgesehen sein, wobei die Auswertung anhand der Signale der Radarempfänger erfolgt. Je nach verwendeter Radarart ist es aber auch möglich, einen Sender und einen Empfänger an die mehreren Antennen zu koppeln und die Signale aus den unterschiedlichen Antennen durch andere Art und Weise - unterschiedliche Frequenzen, unterschiedliche Sende- und Empfangszeiten usw. zuzuordnen.

Somit ist eine Messung der räumlichen Verteilung über mehrere Achsen möglich.

Es können auch mehrere der Füllstandsmessvorrichtungen parallel mit Abstand zueinander verwendet werden, um die Messung auf zwei Achsen auszudehnen.

Dies ist insbesondere vorteilhaft für Fahrzeuge und mehr insbesondere für Luftfahrzeuge wie Flugzeuge, da sich das Fahrzeug um unterschiedliche Achsen bewegen kann. Zum Beispiel hat ein Flugzeug gewisse Pitch- und Roll-Achsen-Winkel während des Fluges. Außerdem können dynamische Effekte wie Beschleunigen, Abbremsen, Vibrationen, Flug bzw. Fahrt entlang einer Kurve, usw. das Profil der Oberfläche der Flüssigkeit auch in geringer Zeit sehr unterschiedlich ausbilden. Trotzdem lässt sich mit einem derartigen mehrachsigen Messsystem eine genaue Erfassung von Füllstand und räumlicher Verteilung und somit auch eine genauer Erfassung der Füllmenge in Echtzeit erreichen.

Gemäß einem weiteren Aspekt schafft die Erfindung einen Tank für ein Fahrzeug, umfassend eine Füllstandsmessvorrichtung nach einer der voranstehenden Ausgestaltungen, wobei die Mehrfachwellenlängen-Schlitzantenne im oberen Bereich im Inneren eines Tankbehälters angeordnet ist und wobei der Radarsender und der Radarempfänger und die Auswerteeinheit außerhalb des Tankbehälters angeordnet sind.

Es ist bevorzugt, dass der Tankbehälter aus Metall und/oder aus Verbundwerkstoff ausgebildet ist.

Es ist bevorzugt, dass der Tank ein Flüssiggas-Tank für flüssiges Gas, insbesondere flüssigen Wasserstoff, ist.

Es ist bevorzugt, dass der Tank ein Flugzeugtank ist.

Gemäß einem weiteren Aspekt schafft die Erfindung ein Fahrzeug, insbesondere Luftfahrzeug, mehr insbesondere Flugzeug, umfassend einen Tank nach einer der voranstehenden Ansprüche.

Die Mehrfachwellenlängen-Schlitzantenne der Füllstandsmessvorrichtung nach einer der voranstehenden Ausgestaltungen, wird vorzugsweise durch ein Verfahren hergestellt, welches die Schritte umfasst: Ermitteln der Dimensionen der Schlitze mittels eines 3D-EM-Simulationstool und Versehen eines aus einem Metallprofil oder Metallrohr gebildeten Wellenleiters mit den entsprechend dimensionierten Schlitzen.

Gemäß noch einem weiteren Aspekt schafft die Erfindung ein Verfahren zum Messen des Füllstands eines Tanks in einem Fahrzeug, insbesondere Luftfahrzeug, umfassend Vorsehen einer Mehrfachwellenlängen-Schlitzantenne in einem oberen Bereich des Tanks, wobei die Mehrfachwellenlängen-Schlitzantenne einen Wellenleiter und mehrere beabstandet an dem Wellenleiter angeordnete Schlitze aufweist, die unterschiedlich dimensioniert sind, so dass sie unterschiedliche Resonanzfrequenzen haben, Koppeln von Radarwellen mit den unterschiedlichen Resonanzfrequenzen an den Wellenleiter, so dass Radarwellen mit unterschiedlichen Resonanzfrequenzen an unterschiedlichen Schlitzen auf die Oberfläche der Flüssigkeit in dem Tank abgestrahlt werden, Empfangen von reflektierten Radarwellen unterschiedlicher Frequenzen mittels der Mehrfachwellen-Schlitzantenne und Erfassen des Füllstands und der räumlichen Verteilung der Flüssigkeit in dem Tank anhand der reflektierten Radarwellen.

Es ist bevorzugt, dass der Füllstand und die räumliche Verteilung eines flüssigen Gases in einem Gastank an Bord eines Fahrzeugs gemessen werden.

Es ist bevorzugt, dass der Füllstand und die räumliche Verteilung eines flüssigen Wasserstoffs in einem Flüssig-Wasserstoff-Behälter an Bord eines Luftfahrzeuges gemessen werden.

Es ist bevorzugt, dass aus dem Füllstand und der räumlichen Verteilung die Füllmenge in dem Tank ermittelt wird.

Ausführungsbeispiel der Erfindung befassen sich mit einer Füllstandsmessung in LH2-Tanks (Flüssig-Wasserstoff-Tanks) mit einem Multi-Band-Slotted-Waveguide-Radar.

Bevorzugte Ausgestaltungen der Erfindung ermöglichen eine Erfassung von Flüssigkeit, insbesondere von flüssigem Wasserstoff (im Folgenden auch einfach LH2 genannt), in einer einfachen und robusten Weise.

Bevorzugte Ausgestaltungen der Erfindung haben insbesondere einen oder mehrere der folgenden Vorteile:
- sie können den Füllstand messen
- sie können die räumliche Verteilung von Flüssigkeit messen
- sie sind sehr robust, da der Messfühler nur aus einer rohrartigen Einrichtung besteht
- es werden keine aktiven Komponenten in dem Tank benötigt
- es werden keine beweglichen Teile in dem Tank benötigt.

Ein Ausführungsbeispiel wird im Folgenden anhand der beigefügten Zeichnungen näher erläutert. Darin zeigt:
- Fig. 1: eine schematische Block-Darstellung eines Fahrzeuges in Form eines Flugzeuges mit einem Tank und einer Füllstandsmessvorrichtung gemäß einem Ausführungsbeispiel der Erfindung;
- Fig. 2: eine schematische Darstellung einer Radarantenne der Füllstandsmessvorrichtung nach Fig. 1; und
- Fig. 3: eine schematische Block-Darstellung des Fahrzeugs von Fig. 1 in Draufsicht.

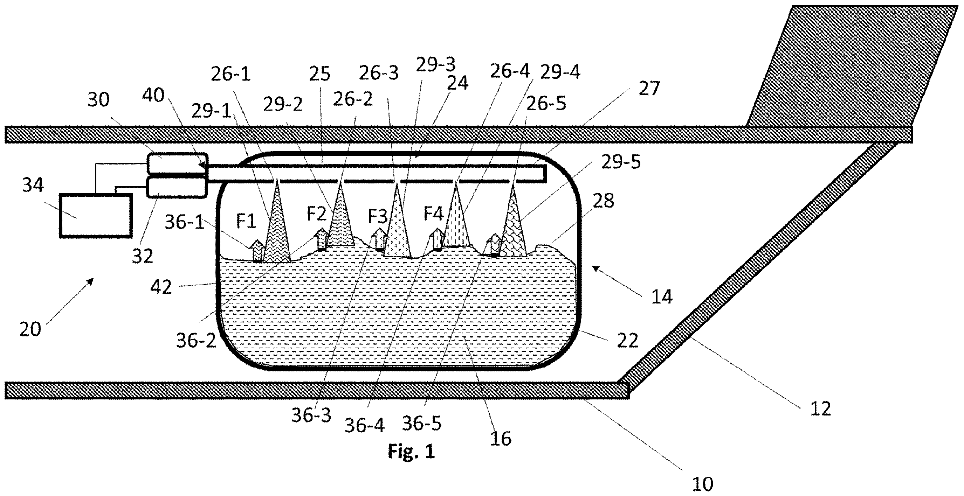

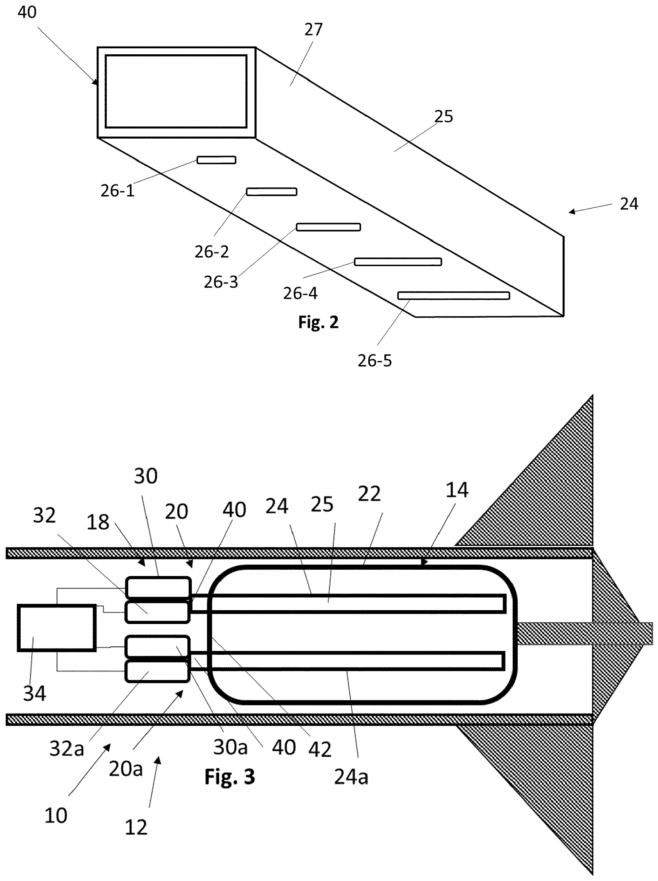

Fig. 1 und 3 zeigen schematisch ein Fahrzeug 10 in Form eines Flugzeugs 12 als Beispiel für ein Luftfahrzeug. Das Flugzeug 12 ist mit einem Tank 14 für Treibstoff versehen. Das Flugzeug 12 ist als Null-Emissionsflugzeug ausgebildet und wird mit Wasserstoff 16 betrieben. Entsprechend ist der Tank 14 als Flüssig-Wasserstoff-Tank ausgebildet.

Der Tank 14 ist mit wenigstens einer Füllstandsmessvorrichtung 18 zum Erfassen von flüssigen Wasserstoff 16 ausgebildet. In anderen Verwendungen kann die Füllstandsmessvorrichtung 18 allgemein zur Erfassung von Flüssigkeiten ausgebildet sein. Bei der hier dargestellten bevorzugten Verwendung ist die Füllstandsmessvorrichtung 18 zum Messen einer Füllmenge in Flüssig-Wasserstoff-Tanks (LH2-Tanks) 14 ausgebildet.

Bei dem Erfassen von LH2 (flüssiger Wasserstoff 16) - insbesondere in Luftfahrzeugen - bestehen besondere Messbedingungen:
- extrem kalte Temperaturen des flüssigen Wasserstoffs 16 (<20K)
- hohe Zuverlässigkeit - der Tank 14 ist dazu bestimmt, für lange Zeit, insbesondere mehr als 10 Jahre, nicht geöffnet zu werden
- einerseits Vakuum
- andererseits hoher Druck möglich.

Dies macht viele der in [1] aufgeführten Messverfahren ungeeignet.

Die Füllstandsmessvorrichtung 18 ist als Radarsystem 20 ausgebildet, um die Füllstände zu messen. Das Radarsystem 20 wird verwendet, um flüssigen Wasserstoff 16 in einem Tankbehälter 21 aus Metall oder Verbundwerkstoff zu messen.

Wie Fig. 1 zeigt, ist im oberen Bereich des Tanks 14, genauer an dem oberen Endbereich des für flüssigen Wasserstoff ausgebildeten Tankbehälters 22, wenigstens eine Multiband-Wellenleiter-Schlitz-Antenne 24 (Multi-band-Slotted-Waveguide-Antenne) installiert.

Weiter weist das Radarsystem 20 einen Radarsender 30, einen Radarempfänger 32 und eine Auswerteeinheit 34 auf. Der Radarsender 30 ist zum Senden von Multiband-Radarwellen mit unterschiedlichen Frequenzen F1 - F5 und zum Einkoppeln derselben auf den Wellenleiter 25 der Antenne 24 ausgebildet. Der Radarempfänger 32 ist zum Empfangen von reflektierten Radarwellen durch den Wellenleiter 25 an diesen gekoppelt. Die Auswerteeinheit 34 ist mit dem Radarsender 30 und dem Radarempfänger 32 verbunden, um aus dem Zeitunterschied zwischen gesendeter und empfangener Radarwelle einen Abstand zwischen Antenne 24 und Flüssigkeitsoberfläche zu ermitteln.

Fig. 2 zeigt eine schematische perspektivische Ansicht der Multiband-Wellenleiter-Schlitz-Antenne 24. Wie in Fig. 1 und Fig. 2 dargestellt, hat die Wellenleiter-Schlitzantenne 24 mehrere Schlitze 26-1 bis 26-5, die bei unterschiedlichen Frequenzen F1-F5 (Multiband) arbeiten. Damit kann das räumliche Profil 28 der Flüssigkeit erhalten werden. Wie man Fig. 2 entnehmen kann, sieht die eigentliche Antenne 24 wie ein (rechteckiges) Rohr 27 mit einigen kleinen Ausschnitten zum Bilden der Schlitze 26-1 - 26-5 aus.

Zum Herstellen der Antenne 24 werden die Dimensionen der Ausschnitte in einem 3D-EM-Simulationstool (Software zur Simulation von elektromagnetischen Komponenten, von unterschiedlichen Anbietern auf dem Markt erhältlich) vorab simuliert, um die für den Tank 14, die möglichen einsetzbaren Frequenzen und die gewünschte Auflösung optimale Position und Dimension für jeden Schlitz 26-1, 26-2, 26-3, 26-4, 26-5 zu erhalten.

Wie Fig. 2 zeigt, sind die Dimensionen der Schlitze 26-1 - 26-5 alle unterschiedlich.

Jeder Schlitz 26-1 - 26-5 ist zu (leicht) unterschiedlichen Frequenzen F1 - F5 resonant. Dies heißt, dass - wie in Fig. 1 angedeutet - Radarwellen 29-1 - 29-5 unterschiedlicher Frequenzen F1 - F5 aus den unterschiedlichen Schlitzen 26-1 - 26-5 austreten.

Die durch die Schlitze 26-1 - 26-5 angeregten Radarwellen 29-1 - 29-5 werden von dem zu messenden Medium, wie hier z.B. LH2 16, reflektiert und werden zurück zu der Antenne 24 gestrahlt, wie dies durch die Pfeile 36-1 - 36-5 angedeutet ist.

Die reflektierte Energie 36-1 - 36-5 wird über den Wellenleiter zu dem externen Radarempfänger 32 geleitet. Dieser wertet die Zeitdifferenz getrennt nach Frequenz F1 bis F5 aus und kann so den Abstand der Flüssigkeitsoberfläche von jedem der Schlitze 26-1 bis 26-5 ermitteln, um so das räumliche Profil 28 des flüssigen Wasserstoffs 14 in dem Tank 14 zu ermitteln. Aufgrund der bekannten Geometrie des Tanks 14 lässt sich aufgrund der so erfassten räumlichen Verteilung der Oberfläche das Flüssigkeitsvolumen des LH2 in dem Tank 14 und somit die Menge an LH2-Treibstoff ermitteln. Somit lässt sich auch bei z.B. durch Turbulenzen sehr unruhiger und sich ständig ändernder Oberflächenverteilung eine sichere Bestimmung der aktuellen LH2-Menge erreichen.

Wie man Fig. 3 entnehmen kann, sind bei der dargestellten Ausführungsform eine erste Multiband-Wellenleiter-Schlitz-Antenne 24 und wenigstens eine zweite Multiband-Wellenleiter-Schlitz-Antenne 24a mit Abstand parallel zueinander vorgesehen. Die erste Multiband-Wellenleiter-Schlitz-Antenne 24 ist an den ersten Radarsender 30 und den ersten Radarempfänger 32a gekoppelt. Die zweite Multiband-Wellenleiter-Schlitz-Antenne 24a ist an einen zweiten Radarsender 30 und einen zweiten Radarempfänger 32a gekoppelt und bildet so ein zweites Radarsystem 20a, das genauso aufgebaut ist und genauso funktioniert wie das oben beschriebene Radarsystem 20. Die Auswerteeinheit 34 ist dazu ausgebildet, aus den Signalen der beiden Radarsysteme 20, 20a das Profil 28 in zwei Achsen - Längsrichtung der Wellenleiter 25 und Richtung quer hierzu - zu erfassen.

Der hier dargestellte Ansatz der Füllstandsmessung und Erfassung räumlicher Verteilung funktioniert unabhängig von dem eingesetzten Radarsignal (dies kann FMCW, Pulssignal, ... oder sonstiges sein).

Die Technik ist sehr robust, da das einzige Ding, das im Tank 14 zu montieren ist, ein Metallrohr 27 ist. Derartige Metallrohre sind oft ohnehin bereits typischerweise in einem Tank 14 der hier in Rede stehenden Art vorgesehen.

Weiter erlaubt es die Technik, eine Durchführung 40 an der Seite des Tanks 14 zu realisieren, was im Vergleich zur Realisierung an der Tankwand 42 vorteilhafter ist. Der Tank 14 ist bei der hier dargestellten Anwendung horizontal positioniert.

Der Radarsender 30, 30a und der Radarempfänger 32, 32a sind außerhalb des Tanks 14 angeordnet.

Für weitere Einzelheiten zum Aufbau weiterer, hier nicht näher beschriebener, grundsätzlich bekannter Elemente des Radarsystems 20 für Füllstandsmessungen wird auf die Literaturstellen [1] und [2] verwiesen.

### Bezugszeichenliste:

- 10: Fahrzeug
- 12: Flugzeug
- 14: Tank
- 16: Wasserstoff
- 18: Füllstandsmessvorrichtung
- 20: Radarsystem
- 20a: zweites Radarsystem
- 22: Tankbehälter
- 24: Antenne
- 24a: zweite Antenne
- 25: Wellenleiter
- 26-1: erster Schlitz
- 26-2: zweiter Schlitz
- 26-3: dritter Schlitz
- 26-4: vierter Schlitz
- 26-5: fünfter Schlitz
- 27: Rohr
- 28: räumliches Profil
- 29-1: Radarwelle mit erster Frequenz
- 29-2: Radarwelle mit zweiter Frequenz
- 29-3: Radarwelle mit dritter Frequenz
- 29-4: Radarwelle mit erster Frequenz
- 29-5: Radarwelle mit fünfter Frequenz
- 30: Radarsender
- 30a: zweiter Radarsender
- 32: Radarempfänger
- 32a: zweiter Radarempfänger
- 34: Auswerteeinheit
- 36-1: reflektierte Radarwelle mit erster Frequenz
- 36-2: reflektierte Radarwelle mit zweiter Frequenz
- 36-3: reflektierte Radarwelle mit dritter Frequenz
- 36-4: reflektierte Radarwelle mit vierter Frequenz
- 36-5: reflektierte Radarwelle mit fünfter Frequenz
- 40: Durchführung
- 42: Tankwand
- F1: erste Frequenz
- F2: zweite Frequenz
- F3: dritte Frequenz
- F4: vierte Frequenz
- F5: fünfte Frequenz

## Patentansprüche

1. Füllstandsmessvorrichtung (18) zum Messen des Füllstands einer Flüssigkeit in einem Tank (14) eines Fahrzeugs (10), umfassend wenigstens eine im oberen Bereich des Tanks (14) anzubringende Multiband-Wellenleiter-Schlitz-Antenne (24), die einen Wellenleiter (25) und mehrere an dem Wellenleiter (25) beabstandet angeordnete Schlitze (26-1 - 26-5) aufweist, die unterschiedlich dimensioniert sind, so dass sie unterschiedliche Resonanzfrequenzen (F1-F5) haben, um jeweils Radarwellen (29-2 - 29-5) mit unterschiedlichen Frequenzen (F1-F5) abzustrahlen,
wenigstens einen mit dem Wellenleiter (25) koppelbaren Radarsender (30) zum Speisen der Multiband-Wellenleiter-Schlitz-Antenne (24) mit Radarwellen mit den unterschiedlichen Resonanzfrequenzen (F1-F5),
wenigstens einen Radarempfänger (32) zum Empfangen reflektierter Radarwellen (36-1 - 36-5) unterschiedlicher Frequenzen (F1-F5) über die Multiband-Wellenleiter-Schlitz-Antenne (24) und eine Auswerteeinheit (34) zum Erfassen des Füllstandes und der räumlichen Verteilung der Flüssigkeit in dem Tank (14) anhand der reflektierten Radarwellen (36-1 - 36-5).

2. Füllstandsmessvorrichtung (18) nach Anspruch 1, **dadurch gekennzeichnet, dass** der Wellenleiter (25) ein metallisches Rechteckrohr (27) mit einer Reihe von Ausschnitten zum Bilden der Schlitze (26-1 - 26-5) ist.

3. Füllstandsmessvorrichtung (18) nach einem der Ansprüche 1 oder 2, **dadurch gekennzeichnet,**
**dass** die Auswerteeinheit (34) dazu ausgebildet ist, aus dem Füllstand und der räumlichen Verteilung die Menge an Flüssigkeit in dem Tank (14) zu bestimmen.

4. Füllstandsmessvorrichtung (18) nach einem der voranstehenden Ansprüche, **dadurch gekennzeichnet,**
**dass** wenigstens eine erste und eine zweite im oberen Bereich des Tanks (14 Multiband-Wellenleiter-Schlitz-Antenne (24, 24a) vorgesehen sind, die jeweils den Wellenleiter (25) und die mehreren an dem Wellenleiter (25) beabstandet angeordnete Schlitze (26-1 - 26-5) aufweisen) und mit Abstand zueinander anzubringen sind, wobei die Füllstandsmessvorrichtung (18) dazu ausgebildet ist, anhand von durch die erste und zweite Multiband-Wellenleiter-Schlitz-Antenne (24, 24a) gesendeter und empfangener Radarwellen (36-1 - 36-5) die räumliche Verteilung der Flüssigkeit zu erfassen.

5. Tank (14) für ein Fahrzeug, umfassend eine Füllstandsmessvorrichtung (18) nach einem der voranstehenden Ansprüche, wobei die wenigstens eine Multiband-Wellenleiter-Schlitz-Antenne (24) im oberen Bereich im Inneren eines Tankbehälters (22) angeordnet ist und wobei der Radarsender (30) und der Radarempfänger (32) und die Auswerteeinheit außerhalb des Tankbehälters (22) angeordnet und an den Wellenleiter (25) gekoppelt sind.

6. Tank (14) nach Anspruch 5,
6.1 wobei der Tankbehälter (22) aus Metall und/oder aus Verbundwerkstoff ausgebildet ist, und/oder
6.2 wobei der Tank (14) ein Flüssiggas-Tank für flüssiges Gas, insbesondere flüssigen Wasserstoff, ist, und/oder
6.3 wobei der Tank (14) ein Flugzeugtank ist.

7. Tank (14) nach Anspruch 5 oder 6, umfassend wenigstens eine erste und eine zweite Flüssigkeitsmessvorrichtung (18) nach Anspruch 1 bis 4, deren Antennen (24, 24a) mit Abstand zueinander, vorzugsweise parallel, angeordnet sind.

8. Fahrzeug (10), insbesondere Luftfahrzeug, umfassend einen Tank (14) nach einem der Ansprüche 5 bis 7.

9. Verfahren zum Messen des Füllstands eines Tanks (14) in einem Fahrzeug (10), insbesondere Luftfahrzeug, umfassend Vorsehen wenigstens einer Multiband-Wellenleiter-Schlitz-Antenne (24, 24a) in einem oberen Bereich des Tanks (14), wobei die Multiband-Wellenleiter-Schlitz-Antenne einen Wellenleiter (25) und mehrere beabstandet an dem Wellenleiter angeordnete Schlitze (26-1 - 26-5) aufweist, die unterschiedlich dimensioniert sind, so dass sie unterschiedliche Resonanzfrequenzen (F1-F5) haben,
Koppeln von Radarwellen (29-1 - 29-5) mit den unterschiedlichen Resonanzfrequenzen (F1 - F5) an den Wellenleiter (25), so dass Radarwellen (29-1 -29-5) mit unterschiedlichen Frequenzen (F1-F5) an unterschiedlichen Schlitzen (26-1 - 26-5) auf die Oberfläche der Flüssigkeit in dem Tank (16) abgestrahlt werden,
Empfangen von reflektierten Radarwellen (36-1 - 36-5) unterschiedlicher Frequenzen (F1-F5) mittels der Multiband-Wellenleiter-Schlitz-Antenne und Erfassen des Füllstands und der räumlichen Verteilung der Flüssigkeit in dem Tank (14) anhand der reflektierten Radarwellen (36-1 - 36-5).

10. Verfahren nach Anspruch 9, wobei mehrere der Multiband-Wellenleiter-Schlitz-Antennen (24, 24a) in dem oberen Bereich des Tanks (14) mit Abstand zueinander angeordnet und zum Abstrahlen und Empfangen der Radarwellen (29-1 - 29-5, 36-1 - 36-5) verwendet werden, um die räumliche Verteilung der Flüssigkeit in dem Tank in mehreren Dimensionen zu erfassen.

11. Verfahren nach Anspruch 9 oder 10, wobei der Füllstand und die räumliche Verteilung
11.1 eines flüssigen Gases in einem Gastank an Bord des Fahrzeugs (10) gemessen werden, und/oder
11.2 eines flüssigen Wasserstoffs (16) in einem Flüssig-Wasserstoff-Behälter (22) an Bord eines Luftfahrzeuges gemessen werden.

12. Verfahren nach einem der Ansprüche 9 bis 11, wobei aus dem Füllstand und der räumlichen Verteilung die Füllmenge in dem Tank (14) ermittelt wird.

13. Verfahren nach einem der Ansprüche 9 bis 12, durchgeführt mit einer oder mehreren der Füllstandsmessvorrichtungen (18) nach einem der Ansprüche 1 bis 4.

## Claims

1. Fill level measuring device (18) for measuring the level of a liquid in a tank (14) of a vehicle (10), comprising at least one multi-band waveguide slot antenna (24) to be attached in the upper region of the tank (14), which has a waveguide (25) and a plurality of slots (26-1 - 26-5) arranged at a distance on the waveguide (25), which are dimensioned differently so that they have different resonance frequencies (F1-F5) in order to each transmit radar waves (29-2 - 29-5) with different frequencies (F1-F5),
at least one radar transmitter (30) that can be coupled to the waveguide (25) for feeding the multiband waveguide slot antenna (24) with radar waves with the different resonance frequencies (F1-F5),
at least one radar receiver (32) for receiving reflected radar waves (36-1 - 36-5) of different frequencies (F1-F5) via the multiband waveguide slot antenna (24) and an evaluation unit (34) for detecting the fill level and the spatial distribution of the liquid in the tank (14) based on the reflected radar waves (36-1 - 36-5).

2. Fill level measuring device (18) according to claim 1, **characterized in that** the waveguide (25) is a metallic rectangular tube (27) with a series of cutouts to form the slots (26-1 - 26-5).

3. Fill level measuring device (18) according to one of claims 1 or 2, **characterized in that** the evaluation unit (34) is configured to determine the amount of liquid in the tank (14) from the fill level and the spatial distribution.

4. Fill level measuring device (18) according to any of the preceding claims, **characterized in** in that at least a first and a second multi-band waveguide slot antenna (24, 24a) are provided in the upper region of the tank (14), each of which having the waveguide (25) and the plurality of slots (26-1 - 26-5) arranged at a distance, wherein the level measuring device (18) is configured to detect the spatial distribution of the liquid based on radar waves (36-1 - 36-5) transmitted and received by the first and second multi-band waveguide slot antenna (24, 24a).

5. Tank (14) for a vehicle, comprising a fill level measuring device (18) according to one of the preceding claims, wherein the at least one multiband waveguide slot antenna (24) is arranged in the upper region inside a tank container (22) and wherein the radar transmitter (30) and the radar receiver (32) and the evaluation unit are arranged outside the tank container (22) and coupled to the waveguide (25).

6. Tank (14) according to claim 5,
6.1 wherein the tank container (22) is made of metal and/or composite material, and/or
6.2 wherein the tank (14) is a liquid gas tank for liquid gas, in particular liquid hydrogen, and/or
6.3 wherein the tank (14) is an aircraft tank.

7. Tank (14) according to claim 5 or 6, comprising at least a first and a second liquid measuring device (18) according to claims 1 to 4, the antennas (24, 24a) of which are arranged at a distance from one another, preferably parallel.

8. Vehicle (10), in particular aircraft, comprising a tank (14) according to one of claims 5 to 7.

9. A method for measuring the fill level of a tank (14) in a vehicle (10), in particular an aircraft, comprising providing at least one multiband waveguide slot antenna (24, 24a) in an upper region of the tank (14), wherein the multiband waveguide slot antenna has a waveguide (25) and a plurality of slots (26-1 - 26-5) arranged at a distance on the waveguide, which are dimensioned differently so that they have different resonance frequencies (F1-F5),
coupling radar waves (29-1 - 29-5) with the different resonance frequencies (F1 - F5) to the waveguide (25), so that radar waves (29-1 - 29-5) with different frequencies (F1-F5) at different slots (26-1 - 26-5) are emitted onto the surface of the liquid in the tank (16), receiving reflected radar waves (36-1 - 36-5) of different frequencies (F1-F5) using the multi-band waveguide slot antenna and detecting the fill level and the spatial distribution of the liquid in the tank (14) using the reflected radar waves (36-1 - 36-5).

10. The method according to claim 9, wherein a plurality of the multi-band waveguide slot antennas (24, 24a) arranged in the upper region of the tank (14) at a distance from one another and for radiating and receiving the radar waves (29-1 - 29-5, 36-1 - 36-5) are used to record the spatial distribution of the liquid in the tank in several dimensions.

11. The method according to claim 9 or 10, wherein the fill level and the spatial distribution
11.1 of a liquid gas is measured in a gas tank on board the vehicle (10), and/or
11.2 of liquid hydrogen (16) is measured in a liquid hydrogen container (22) on board an aircraft.

12. The method according to any one of claims 9 to 11, wherein the filling quantity in the tank (14) is determined from the filling level and the spatial distribution.

13. The method according to one of claims 9 to 12, carried out with one or more of the level measuring devices (18) according to one of claims 1 to 4.

## Revendications

1. Dispositif de mesure de niveau (18) pour mesurer le niveau d'un liquide dans un réservoir (14) d'un véhicule (10), comprenant au moins une antenne multibande à guide d'ondes à fente (24) à monter dans la partie supérieure du réservoir (14), qui comprend un guide d'ondes (25) et plusieurs fentes (26-1 - 26-5) espacées sur le guide d'ondes (25), qui sont dimensionnées différemment de sorte qu'elles ont des fréquences de résonance différentes (F1-F5) pour émettre respectivement des ondes radar (29-2 - 29-5) de fréquences différentes (F1-F5),
au moins un émetteur radar (30) pouvant être couplé au guide d'ondes (25) pour alimenter l' antenne multibande à guide d'ondes à fente (24) avec des ondes radar ayant les différentes fréquences de résonance (F1-F5),
au moins un récepteur radar (32) pour recevoir des ondes radar réfléchies (36-1 - 36-5) de différentes fréquences (F1-F5) par l'intermédiaire de l' antenne multibande à guide d'ondes à fente (24) et une unité d'évaluation (34) pour détecter le niveau de remplissage et la répartition spatiale du liquide dans le réservoir (14) à l'aide des ondes radar réfléchies (36-1 - 36-5).

2. Dispositif de mesure de niveau (18) selon la revendication 1, **caractérisé en ce que** le guide d'ondes (25) est un tube métallique rectangulaire (27) comportant une série de découpes pour former les fentes (26-1 - 26-5).

3. Dispositif de mesure de niveau (18) selon l'une des revendications 1 ou 2, **caractérisé en ce que** l'unité d'évaluation (34) est conçue pour déterminer la quantité de liquide dans le réservoir (14) à partir du niveau de remplissage et de la répartition spatiale.

4. Dispositif de mesure de niveau (18) selon l'une des revendications précédentes, **caractérisé en ce qu'**au moins une première et une deuxième antennes multibande à guide d'ondes à fente (24, 24a) sont prévues dans la partie supérieure du réservoir (14), chacune comprenant le guide d'ondes (25) et la pluralité de fentes (26-1 - 26-5) espacées sur le guide d'ondes (25)) et devant être placées à distance les unes des autres, dans lequel le dispositif de mesure de niveau (18) est conçu pour détecter la répartition spatiale du liquide à l'aide d'ondes radar (36-1 - 36-5) transmises et reçues par les première et deuxième antennes multibande à guide d'ondes à fente (24, 24a).

5. Réservoir (14) pour véhicule, comprenant un dispositif de mesure de niveau (18) selon l'une des revendications précédentes, dans lequel la au moins une antenne multibande à guide d'ondes à fente (24) est disposée dans la zone supérieure à l'intérieur d'un conteneur-citerne (22) et dans lequel l'émetteur radar (30) et le récepteur radar (32) ainsi que l'unité d'évaluation sont disposés à l'extérieur du conteneur-citerne (22) et couplés au guide d'ondes (25).

6. Réservoir (14) selon la revendication 5,
6.1 dans lequel le conteneur-citerne (22) est réalisé en métal et/ou en matériau composite, et/ou
6.2 dans lequel le réservoir (14) est un réservoir de gaz liquéfié, en particulier d'hydrogène liquide, et/ou
6.3 où le réservoir (14) est un réservoir d'avion.

7. Réservoir (14) selon la revendication 5 ou 6, comprenant au moins un premier et un deuxième dispositif de mesure de liquide (18) selon les revendications 1 à 4, dont les antennes (24, 24a) sont disposées à distance l'une de l'autre, de préférence parallèles.

8. Véhicule (10), notamment aéronef, comprenant un réservoir (14) selon l'une des revendications 5 à 7.

9. Procédé de mesure du niveau de remplissage d'un réservoir (14) dans un véhicule (10), notamment un aéronef, comprenant fourniture d'au moins une antenne multibande à guide d'ondes à fente (24, 24a) dans une région supérieure du réservoir (14), dans lequel l'antenne multibande à guide d'ondes à fente comprend un guide d'ondes (25) et une pluralité de fentes (26-1 - 26-5) disposées à distance sur le guide d'ondes, qui sont dimensionnées différemment de sorte qu'elles aient des fréquences de résonance différentes (F1- F5),
couplage au guide d'ondes (25) d'ondes radar (29-1 - 29-5) avec des fréquences de résonance différentes (F1 - F5), de sorte que des ondes radar (29-1 - 29-5) avec des fréquences différentes (F1-F5) sont projetés sur la surface du liquide dans le réservoir (16) au niveau de différentes fentes (26-1 - 26-5),
réception d'ondes radar réfléchies (36-1 - 36-5) de différentes fréquences (F1-F5) à l'aide de l'antenne multibande à guide d'ondes à fente et détection du niveau de remplissage et de la répartition spatiale du liquide dans le réservoir (14) à l'aide des ondes radar réfléchies (36-1 - 36-5).

10. Procédé selon la revendication 9, dans lequel une pluralité d'antennes multibande à guide d'ondes à fente (24, 24a) disposées dans la région supérieure du réservoir (14) à distance les unes des autres sont utilisées pour rayonner et recevoir les ondes radar (29-1 - 29-5, 36-1 - 36-5) pour enregistrer la répartition spatiale du liquide dans le réservoir en plusieurs dimensions.

11. Procédé selon la revendication 9 ou 10, dans lequel le niveau de remplissage et la répartition spatiale
11.1 d'un gaz liquide est mesuré dans un réservoir de gaz à bord du véhicule (10), et/ou
11.2 d'hydrogène liquide (16) est mesuré dans un conteneur citerne d'hydrogène liquide (22) à bord d'un aéronef.

12. Procédé selon l'une quelconque des revendications 9 à 11, dans lequel la quantité de remplissage dans le réservoir (14) est déterminée à partir du niveau de remplissage et de la répartition spatiale.

13. Procédé selon l'une des revendications 9 à 12, réalisé avec un ou plusieurs des dispositifs de mesure de niveau (18) selon l'une des revendications 1 à 4.
